# EUROPÄISCHE PATENTSCHRIFT

(11) **EP 1 200 986 B1**
(45) Veröffentlichungstag und Bekanntmachung des Hinweises auf die Patenterteilung: **13.12.2006**
(21) Anmeldenummer: 00960303.6
(22) Anmeldetag: 24.07.2000
(51) Int. Cl.: H01L 21/314, G06K 9/20

(54) **PASSIVIERUNGSSCHICHTSTRUKTUR**
PASSIVATION LAYER STRUCTURE
STRUCTURE A COUCHE DE PASSIVATION

(30) Priorität: 30.07.1999 DE 19935910
(43) Veröffentlichungstag der Anmeldung: 02.05.2002
(73) Patentinhaber: Infineon Technologies AG, 81669 München (DE)
(72) Erfinder: RÖHL, Siegfried, D-82054 Sauerlach (DE); VON BASSE, Paul-Werner, D-82515 Wolfratshausen (DE); SCHEITER, Thomas, D-82041 Oberhaching (DE); SASSE, Thorsten, D-93049 Regensburg (DE); OPOLKA, Heinz, D-93059 Regensburg (DE)
(74) Vertreter: Epping - Hermann - Fischer
(86) Internationale Anmeldenummer: PCT/DE2000/002404
(87) Internationale Veröffentlichungsnummer: WO 2001/009936

(56) Entgegenhaltungen:
- US-A- 5 907 627
- PATENT ABSTRACTS OF JAPAN vol. 1996, no. 10, 31. Oktober 1996 (1996-10-31) & JP 08 148485 A (FUJITSU LTD), 7. Juni 1996 (1996-06-07)

## Beschreibung

Die vorliegende Erfindung betrifft eine Passivierungsschichtstruktur für Halbleiterbauelemente, die insbesondere für kapazitiv messende Sensoren geeignet ist.

Halbleiterbauelemente, die Umwelteinflüssen und insbesondere mechanischem Verschleiß ausgesetzt sind, benötigen eine besonders harte und kratzfeste Passivierung. Insbesondere bei Fingerabdrucksensoren tritt das Problem auf, daß die für die Auflage einer Fingerbeere vorgesehene Auflagefläche mechanischem Verschleiß ausgesetzt ist, der die Eigenschaften des Fingerabdrucksensors wesentlich verschlechtert. Bei Fingerabdrucksensoren, die nach dem kapazitiven Meßverfahren arbeiten, kommt es darauf an, daß der Abstand zwischen einer aufliegenden Fingerbeere und Leiterebenen in dem Halbleiterbauelement des Sensors auch nach längerem Gebrauch des Sensors innerhalb enger Toleranzen konstant gehalten wird. Herkömmliche Passivierungsschichten aus Siliziumoxid oder Siliziumnitrid, wie sie üblicherweise in der Halbleitertechnologie verwendet werden, reichen bei einer stärkeren Beanspruchung der Oberfläche der Bauelemente nicht aus. Die Verwendung dickerer Passivierungsschichten oder üblicher Passivierungsmaterialien wie zum Beispiel Polyimid reichen nicht aus, da durch dickere Passivierungen die Empfindlichkeit des Sensors herabgesetzt wird.

Aufgabe der vorliegenden Erfindung ist es, eine Passivierungsschichtstruktur für Halbleiterbauelemente anzugeben, die insbesondere zum Einsatz bei kapazitiv messenden Sensoren eine ausreichende Kratzfestigkeit aufweist.

US-A-5 907 627 beschreibt eine Passivierungsschichtstruktur mit allen Merkmalen des Oberbegriffs des Anspruchs 1.

Diese Aufgabe wird mit der Passivierungsschichtstruktur mit den Merkmalen des Anspruches 1 gelöst. Ausgestaltungen ergeben sich aus den abhängigen Ansprüchen.

Die Erfindung beruht auf der Erkenntnis, daß mit der Scherfestigkeit die Kratzfestigkeit der Passivierungsschichten verbessert wird. Die Passivierungsschichtstruktur, die aus einer strukturierten Leiterschicht (z. B. Anordnung der Sensorflächen eines kapazitiv messenden Sensors) und den darauf aufgebrachten Passivierungsschichten gebildet wird, ist erfindungsgemäß so strukturiert, daß die Leiterflächen in gitterartiger Weise fragmentiert sind. Auf diese Weise ruht die unterste Passivierungsschicht durch Aussparungen in der Leiterschicht hindurch auf der darunter befindlichen Schicht.

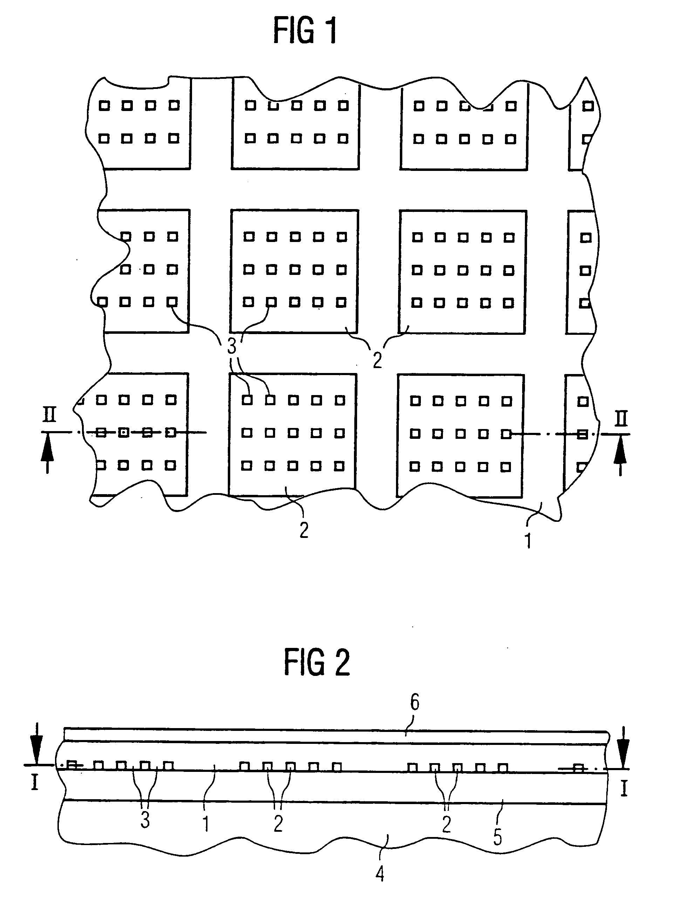

Es folgt eine genauere Erläuterung der erfindungsgemäßen Passivierungsschichtstruktur anhand des in den Figuren 1 und 2 in Aufsicht bzw. im Querschnitt dargestellten Ausführungsbeispiels.

In Figur 1 ist in Aufsicht eine Ebene eines Halbleiterbauelementes dargestellt, in der eine Leiterschicht 2 angeordnet ist, die in Anteile mit flächiger Ausdehnung strukturiert ist. Zwischen diesen Anteilen befindet sich das Material einer Passivierungsschicht 1. Die flächigen Anteile der Leiterschicht 2 sind mit Aussparungen 3 versehen, die mit dem Material der Passivierungsschicht 1 gefüllt sind. In dem Querschnitt der Figur 2 ist der zugehörige Schichtaufbau dargestellt. Es ist dort erkennbar, wie das Material der Passivierungsschicht 1 die Aussparungen 3 der flächigen Anteile der Leiterschicht 2 ausfüllt und auf einer darunter befindlichen Basisschicht 5 ruht. Diese Basisschicht 5 kann zum Beispiel eine elektrisch isolierende Schicht sein, die die Leiterschicht 2 nach unten elektrisch isoliert. Unterhalb der Basisschicht 5 können sich weitere Strukturierungen des Bauelementes, zum Beispiel ein Halbleitersubstrat mit einer darauf aufgebrachten Schichtstruktur, befinden. In Figur 2 ist der untere Anteil des Halbleiterbauelementes 4 ohne Strukturierung im Schema eingezeichnet. Auf der Oberseite der Passivierungsschicht 1 kann mindestens eine weitere Passivierungsschicht 6 aufgebracht sein.

Bei der erfindungsgemäßen Passivierungsschichtstruktur wird die interlaminare Scherfestigkeit dadurch erhöht, daß die flächigen Anteile der strukturierten Leiterschicht 2 durch die Aussparungen 3 fragmentiert werden, so daß eine Art Gitter oder dergleichen ausgebildet ist. Auf diese Weise ist es möglich, auch im Bereich der flächigen Anteile der Leiterschicht 2 die darüber befindliche Passivierungsschicht 1 mit der darunterliegenden Basisschicht 5 (zum Beispiel einer Oxidschicht) zu verbinden. Die interlaminare Scherfestigkeit kann zusätzlich dadurch erhöht werden, daß eine entsprechende Fragmentierung auch in einer Metallisierungsebene unterhalb der Basisschicht 5 vorhanden ist, so daß bereits die Basisschicht 5 eine verbesserte Scherfestigkeit aufweist.

Trotz der auf diese Weise reduzierten Flächeninhalte der Leiterflächen, die für eine kapazitive Messung zur Verfügung stehen, ist die Empfindlichkeit eines mit einer erfindungsgemäßen Passivierungsschichtstruktur versehenen Sensors gleich oder besser als ein herkömmlich strukturierter und passivierter kapazitiv messender Sensor. Das ist bedingt durch die Einkopplung von indirekten Streukapazitäten an den Seitenkanten des Gitters.

Bei dem in Figur 1 in Aufsicht dargestellten Ausführungsbeispiel sind die flächigen Anteile der Leiterschicht 2 zum Beispiel die Leiter, die jeweils einem Bildpunkt bei einem kapazitiv messenden Fingerabdrucksensor zugeordnet sind. Die Sensorflächen sind dann zum Beispiel quadratisch und besitzen eine Seitenabmessung von 40 bis 50 µm. Die Aussparungen 3, die bei diesem Beispiel in drei parallelen Reihen zu jeweils fünf Aussparungen angeordnet sind, können zum Beispiel eine Seitenabmessung von 3 µm besitzen.

## Patentansprüche

1. Passivierungsschichtstruktur für kapazitiv messende Sensoren mit einer Leiterschicht (2), die in Anteile mit flächiger Ausdehnung strukturiert ist und die zwischen einer Basisschicht (5) und einer Passivierungsschicht (1) angeordnet ist,
**dadurch gekennzeichnet,**
- **daß** die Anteile mit flächiger Ausdehnung der Leiterschicht (2) Aussparungen (3) aufweisen und
- die Passivierungsschicht (1) auch in diesen Aussparungen (3) vorhanden ist und so mit der Basisschicht (5) verbunden ist.

2. Passivierungsschichtstruktur nach Anspruch 1,
bei der die Anteile mit flächiger Ausdehnung der Leiterschicht (2) Sensorfelder eines kapazitiv messenden Finderabdrucksensors sind.

3. Passivierungsschichtstruktur nach Anspruch 1 oder 2,
bei der die Aussparungen (3) auf einem gitterartigen Raster angeordnet sind.

4. Passivierungsschichtstruktur nach einem der Ansprüche 1 bis 3,
bei der die Basisschicht (5) auf einer mit Aussparungen versehenen Metallisierungsebene aufgebracht ist und mit einer darunter befindlichen weiteren Schicht verbunden ist.

5. Passivierungsschichtstruktur nach einem der Ansprüche 1 bis 4,
bei der die Passivierungsschicht (1) Oxid oder Nitrid ist und die Basisschicht (5) Oxid ist.

## Claims

1. Passivation layer structure for sensors which effect capacitive measurement, having a conductor layer (2), which is patterned into portions with an areal extent and which is arranged between a base layer (5) and a passivation layer (1),
**characterized**
- **in that** the portions with an areal extent of the conductor layer (2) have cutouts (3), and
- the passivation layer (1) is also present in these cutouts (3) and is thus connected to the base layer (5).

2. Passivation layer structure according to Claim 1,
in which the portions with an areal extent of the conductor layer (2) are sensor arrays of a fingerprint sensor which effects capacitive measurement.

3. Passivation layer structure according to Claim 1 or 2,
in which the cutouts (3) are arranged on a lattice-like grid.

4. Passivation layer structure according to one of Claims 1 to 3,
in which the base layer (5) is applied on a metallization plane provided with cutouts and is connected to a further layer situated beneath that.

5. Passivation layer structure according to one of Claims 1 to 4,
in which the passivation layer (1) is oxide or nitride and the base layer (5) is oxide.

## Revendications

1. Structure de couche de passivation pour des capteurs à mesure capacitive, ayant une couche de conducteurs (2), qui est structurée en portions ayant une étendue en surface et qui est disposée entre une couche de base (5) et une couche de passivation (1),
**caractérisée en ce que**
- les portions de la couche de conducteurs (2) ayant une étendue en surface comportent des évidements et la couche de passivation (1) est également présente dans ces évidements (3) et ainsi reliée à la couche de base (5).

2. Structure de couche de passivation suivant la revendication 1,
dans laquelle les portions de la couche de conducteurs (2) ayant une extension en nappe sont des champs de capteurs d'un capteur d'empreintes digitales à mesure capacitive.

3. Structure de couche de passivation suivant la revendication 1 ou 2,
dans laquelle les évidements (3) sont disposés sur une trame du type d'une grille.

4. Structure de couche de passivation suivant l'une quelconque des revendications 1 à 3,
dans laquelle la couche de base (5) est déposée sur un plan de métallisation muni d'évidements et est reliée à une couche supplémentaire située sous ce dernier.

5. Structure de couche de passivation suivant l'une des revendications 1 à 4,
dans laquelle la couche de passivition (1) est un oxyde ou une nitrure et la couche de base (5) est un oxyde.
